# EUROPEAN PATENT APPLICATION

(11) **EP 1 501 031 A1**
(43) Date of publication of application: **26.01.2005**
(21) Application number: 04015606.9
(22) Date of filing: 02.07.2004
(51) Int. Cl.: G06F 17/60

(54) **System and method for effective distribution of travel inventory allotments**

(30) Priority: 03.07.2003 US 613383
(71) Applicant: Hotel Exchange.com Pte. Ltd., Great World City, West Tower No. 13-07, Singapore 237994 (SG)
(72) Inventor: Liman, Hartono, Jakarta 11610 (ID)
(74) Representative: Käck, Jürgen, Dipl.-Ing.

(57) **Abstract**

A system and method for the efficient distribution of travel inventory, and more specifically the efficient distribution of hotel rooms is provided. The system comprises a distribution system (206) which organizes users (i.e., clients) into tiers. Each tier contains at least one user, and each tier is assigned a maximum allotment of travel inventory in each inventory category. The system further comprises a management engine (310) which monitors the maximum travel inventory allotments for each tier, monitors a total inventory available for each inventory category, determines if a reservation is allowed, and automatically updates total inventory available after each allowed reservation.

## Description

### BACKGROUND OF THE INVENTION

### Field of the Invention

The present invention relates generally to travel reservation systems, and more particularly to a system and method for effective distribution of travel inventories and allotments.

### Description of Related Art

Conventionally, hotel, airline, and other travel reservations are usually booked through the use of travel agents. Typically, a traveler will contact a travel agent, and indicate travel dates, destinations, hotel preferences, and desired room type. Agents who do not have direct contract agreements with a particular hotel or travel provider will typically access a Global Distribution System (GDS) or similar distribution system via a web-based portal or a proprietary terminal arrangement. GDS is a distribution channel which allows travel suppliers (e.g., travel providers, hotels, airlines) to offer their products to the travel product reseller. GDS allows for display of information and management of inventory in an electronic medium. For example, the Sabre GDS links travel agents with more than 400 airlines, 50 car rental companies, 230 tour operators, cruise lines, railroads, and hundreds of hotel property management companies with approximately 60,000 hotel properties. Subsequently, GDS forwards the traveler's travel requirements to a property management system (PMS) of an appropriate hotel property management company. Alternatively in the case where GDS is not directly link to PMS, there is special terminal (or computer) through which the travel supplier retrieves booking information generated from GDS. Then, the travel supplier must loaded the information to their PMS manually. The PMS will then log the reservation and adjust room availability accordingly.

In many cases, travel agents have paper contract agreements with a particular hotel or other travel supplier for special confidential rates and room allotment guarantees, which usually give the travel agent a much cheaper rate compared with GDS rates. In this situation, these agents will most likely book directly with the hotel without using GDS. However, it is often difficult for a hotel or travel provider to maintain the terms of the various contracts and balance the required contracted room allotments.

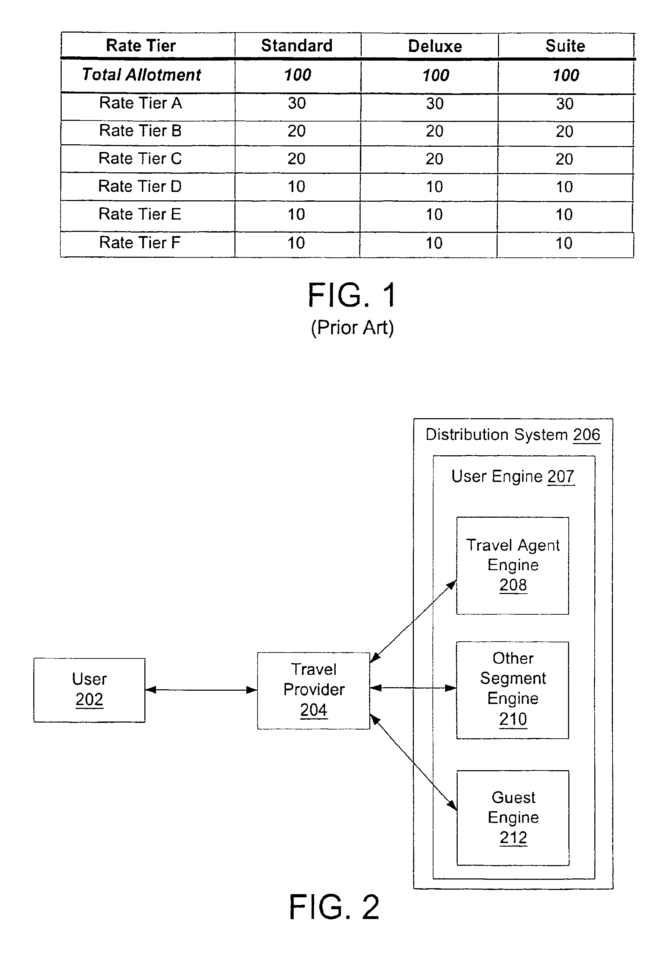

Disadvantageously, the prior art distribution systems have several drawbacks. First, prior art distribution systems only allow for straight allotment of hotel rooms or airline seats. Referring to FIG. 1, an exemplary table of hotel room allotments for a particular day is shown for an example hotel according to the straight allotment distribution system. In this example, the hotel has 100 total rooms in each category (i.e., standard, deluxe, and suite) available. The hotel's distribution system may include two different agent tiers (i.e., rate tiers A and B), two different corporate tiers (i.e., corporate tiers C and D), one internet guest tier (i.e., rate tier E), and a GDS tier (i.e., tier F). It should be noted that the prior art straight allotment distribution systems are typically not centralized. Thus, current reservations and inventory for each tier is not maintained in one single location.

In this exemplary straight distribution system, the total room allotment cannot exceed the total rooms available (i.e., 100 rooms in this example) for each category. If the hotel assigns more than 100 total rooms in a category to the rate tiers, overbooking may occur. These room allotments are conventionally set by negotiated contracts between the hotels, travel providers, corporations, and travel agents. Thus, a rate tier may represent a single contracted client with a guaranteed room allotment. However, not every client may be allowed guaranteed room allotments since there may not be enough rooms to allot (e.g., if there are 10 clients each desiring a contract for 20 rooms in their allotment, a hotel with only 100 rooms cannot accommodate every one of these clients).

Another problem associated with straight room allotment is that rooms are not efficiently allotted. For example, rate tier A has a straight allotment of 30 standard rooms and rate tier B has a straight allotment of 20 standard rooms. If Travel Agent X associated with rate tier B books all 20 of the allotted standard rooms, rate tier B will not have any more standard rooms available for booking. Subsequently, Travel Agent X will receive a "no room available" response when trying to book any further standard rooms. Concurrently, rate tier A may still have 12 (of their allotted 30) standard rooms available. However, these 12 standard rooms cannot be accessed by Travel Agent X, and may remain unreserved even though Travel Agent X has travelers wanting to reserve these rooms.

In order to overcome this straight allotment inefficiency, a hotel or travel provider may need to consistently monitor and change their room allotment/rate tier assignments to insure that every rate tier has available rooms. The monitoring may even be required after every reservation is made. Thus, in the above example, the hotel would need to monitor the distribution system, and potentially move available standard rooms from rate tier F to rate tier B. Disadvantageously, this monitoring process is time consuming, costly to maintain, and potentially creates lost opportunity in sales.

A further disadvantage of prior art systems is that only one room allotment and one single pricing (i.e., one rate for everyone accessing the system) for a particular room category or airline reservation can be offered. Thus, a small travel agent only occasionally booking at a particular hotel will have access to the same room allotment and rate as a large travel agent who regularly books travelers with the same particular hotel.

A yet further disadvantage of prior art distribution systems is that one reservation transaction may incur a plurality of fees. First, the travel agent must be paid a commission fee for booking with the particular travel provider. Next, there is a booking fee charged by GDS if so used. And finally, there may be a transaction fee for reservations booked using a credit card. Additionally, reservation companies such as Utell® further charge a commission on every reservation.

To circumvent the fee issue, some hotel property management companies, hotel franchises, and airlines, in addition to, or in lieu of, using GDS, operate their own dedicated reservation system which allows travelers and agents to book directly with the travel provider. For example, hotel franchises such as Hilton® and Hyatt® operate their own websites and toll free phone reservation systems. Consequently, these hotel franchises are able to remove the travel agent (when guests book themselves) and GDS from these transaction, thus reducing the amount of fees the hotels will have to pay. However, the client can only access one rate and one allotment per category to be shared among all market segments.

However, there are disadvantages to maintaining dedicated reservation systems. These dedicated reservation systems are often expensive and timely to maintain. Thus, independent and non-franchise hotels are typically unable to take advantage of this option. Further, dedicated reservation system still suffer from the disadvantages of single pricing (i.e., every user gets the same rate) and room allotment (i.e., every user has access to the same limited number of rooms) problems.

In many cases, travel agents have paper contract agreements with a particular hotel or other travel supplier for special confidential rates and room allotment guarantees, which usually give the travel agent a much cheaper rate compared with GDS rates. In this situation, these agents will most likely book directly with the hotel without using GDS. However, it is often difficult for a hotel or travel provider to maintain the terms of the various contracts and balance the required contracted room allotments.

More recently, individual guests are making their own travel reservations through the Internet. However, oftentimes the guests search and book reservations through on-line travel agencies, such as Travelocity® and Expedia® . These online agencies also charge agency fees and booking fees. Further, these on-line agencies still suffers from the disadvantage of straight room allotment. Thus, if Travelocity® has reserved their entire allotment of rooms, Travelocity® customers cannot access rooms still available through Expedia® . This may result in the hotel having unreserved, empty rooms even though travelers want to reserve those rooms.

A final disadvantage of prior art distribution systems is that no one centralized system can accommodate all types of reservations. Typically, contracted room allotments are removed from the remaining travel inventory, and the contractor travel agent or advisor handles their own reservations. For example, Expedia® may contract to buy and sell 30 standard rooms (e.g., internally referred to as rate tier A, FIG. 1 by a hotel). These 30 rooms are then removed from the hotel's inventory and maintained separately on the Expedia® site. Concurrently, other contractors may maintain their own reservation system, and only provide occasional updates to the hotel. In addition, the hotel may maintain their own set of available rooms and reservations. Thus, the hotel may not have an accurate accounting of all their rooms at all times.

Therefore, there is a need for a system and method for effective distribution of travel allotments. There is a further need for a distribution system which allows a hotel or franchise to directly control their room rates and room inventories.

### SUMMARY OF THE INVENTION

The present invention provides a system and method for efficient distribution of travel inventory allotments, and more specifically the efficient distribution of hotel rooms. The system comprises a centralized distribution system which categories users (i.e., clients) into tiers. The tiers are organized within a user engine and sub-engines such as a travel agent engine, a corporate engine, an other segment engine, or any other type of user sub-engine a travel provider desires. Each tier contains at least one user, and each tier is assigned a maximum allotment of travel inventory. The system further comprises a management engine which monitors the maximum travel allotment for each inventory category in each tier, monitors a total inventory available, and automatically updates total inventory available after each inventory reservation or sale.

The user engine or the sub-engines may further comprise a registration engine which verifies a user's password and login prior to allowing the user access to the maximum inventory allotments in their assigned tier. Additionally, the registration engine collects data from new users which will be utilized by a travel provider to determine which tier to assign the new user to. In a further embodiment of the present invention, the user engine or each sub-engine further comprises a rate database, which contains corresponding inventory rates for each inventory category in each tier of the user engine.

In exemplary embodiments of the present invention, methods for establishing and utilizing a maximum allotment distribution system are provided. The establishing method comprises establishing a plurality of tiers. Each tier represents a client or a grouping of clients organized according to criteria determined by the travel provider. For example, the tiers may be organized by size, location of clients, amount of business generated by clients, etc. Once tiers are established, the travel provider is able to assign individualized maximum allotments and rates to each tier.

Because the present invention provides a maximum allotment distribution system, a maximum inventory allotment for each inventory category is assigned to each of the tiers. When a reservation is attempted, a comparison between a reservation request from a member of a tier with a maximum inventory allotment for the tier is performed by an allotment engine. Further, a comparison of the reservation request with a total inventory available is also performed by the allotment engine. Subsequently, the reservation is allowed if the reservation request for a particular inventory category is less than or equal to the maximum inventory allotment for the tier and the reservation request is less than or equal to the total inventory available.

### BRIEF DESCRIPTION OF THE DRAWINGS

FIG. 1 is a prior art straight room allotment table;
FIG. 2 is a schematic diagram of an exemplary communication architecture for travel reservations;
FIG. 3 is a block diagram of the distribution system of FIG. 2, according to one embodiment of the present invention;
FIG. 4a is an exemplary block diagram of the travel agent engine of FIG. 3;
FIG. 4b is a block diagram of an exemplary agent grouping database in the travel agent engine of FIG. 4a;
FIG. 4c is a block diagram of exemplary relationships between agent tiers and a rate database, according to an embodiment of the present invention;
FIG. 5a is an exemplary block diagram of the other segment engine of FIG. 3;
FIG. 5b is a block diagram of an exemplary other segment grouping database in the other segment engine of FIG. 5a;
FIG. 5c is a block diagram of exemplary relationships between other segment tiers and a rate database, according to an embodiment of the present invention;
FIG. 6 is an exemplary block diagram of the guest engine of FIG. 3;
FIG. 7a is an exemplary block diagram of the room management engine of FIG. 3;
FIG. 7b -FIG. 7d are block diagrams of exemplary relationships between agent tiers, other tiers, and a guest tier and their respective allotment databases, according to exemplary embodiments of the present invention;
FIG. 7e illustrates an exemplary maximum allotment of hotel rooms according to one embodiment of the present invention; and
FIG. 8 is an alternative embodiment of the user engine.

### DESCRIPTION OF EXEMPLARY EMBODIMENTS

The present invention provides a system and method for effective distribution of travel inventory. In contrast to prior art systems of straight allotments, the present invention allots maximum quantities of a travel inventory to categorized tiers of clients. The present invention allows for a more efficient distribution of the travel inventories, and the likelihood that more travel inventories will be sold. Furthermore, the present invention allows categorization of different types of users within one central distribution system. The maximum quantities of travel inventory are then distributed among these categorizations. Although the specification discusses the present invention with reference to the distribution and reservation of hotel rooms, the present invention may be utilized for the distribution of any travel or non-travel inventory such as airline seats and show tickets.

FIG. 2 is a schematic diagram of an exemplary communication architecture for travel reservations used in one embodiment of the present invention. Initially, a user 202, such as an individual traveler or a travel agent, will access a travel provider (e.g., travel supplier or service provider) website 204 via the Internet. The travel provider website 204 may be a website for a particular hotel or hotel chain, airline, travel agent member organization (e.g., www.hotelexchange.com), corporate member organization (e.g., www.hotelforcorporate.com), or any other website which provides access to a distribution system 206. The travel provider website 204 is subsequently linked to the distribution system 206 which maintains travel inventories (e.g., hotel rooms) available for distribution.

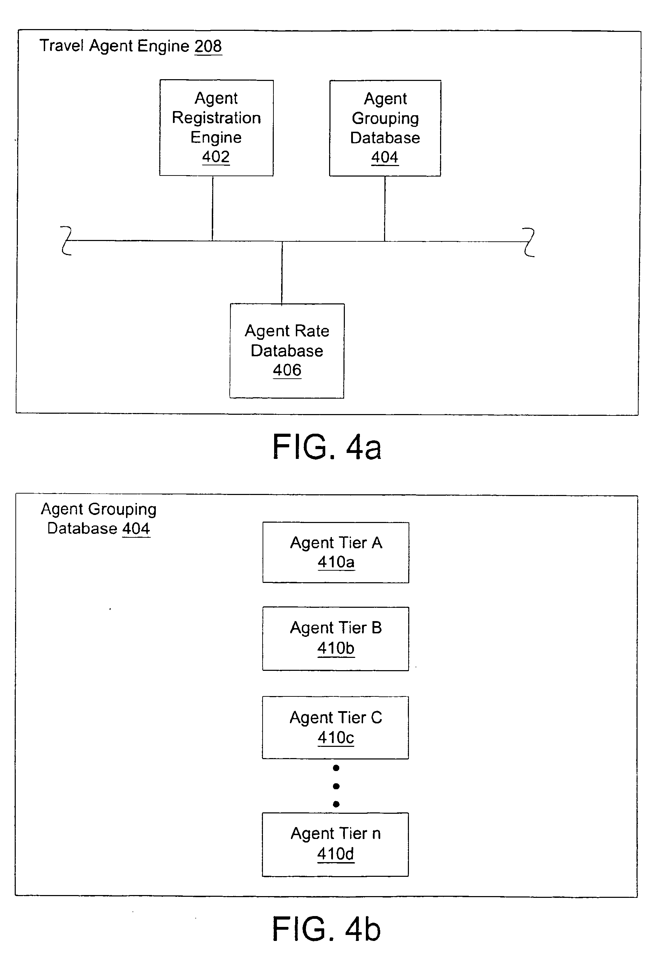

The exemplary distribution system 206 comprises a user engine 207 further comprising a travel agent engine 208, an other segment engine 210, and a guest engine 212. Each user sub-engine 208, 210, and 212 within the user engine 207 will be discussed in more detail in connection with FIGS. 4a, 5a, and 6a, respectively. Depending on the user 202 type, the travel provider website 204 will direct the user 202 to the proper user sub-engine 208, 210, or 212. Registered users are provided a link to the appropriate travel agent engine 208 or other segment engine 210 via a login and password field on the travel provider website 204. For example, if the user 202 is a travel agent previously registered with the travel provider 204, the travel agent may access the travel agent engine 208 upon entering a valid, registered login and password. Similarly, registered corporations or other segment users may access the other segment engine 210 with a valid, registered login and password. Alternatively, individual users or unregistered users are provided a link to the guest engine 212 simply by selecting a reservation button. No login or password is required in this last situation.

For a new travel agent or other segment user desiring to register with the travel provider website 204, a registration option may be given on the travel provider website 204. By selecting this option, the new user is directed to either the travel agent engine 208 or the other segment engine 210 depending on their classification, and asked to input registration information. The travel provider may then assign the newly registered user to a proper category or tier within their user engine. This tier system will be discussed in more detail in subsequent figures. Alternatively, the travel provider can assign a login and password to a qualified, non-registered travel agent or other segment user, for example, if a particular agent is a regular customer.

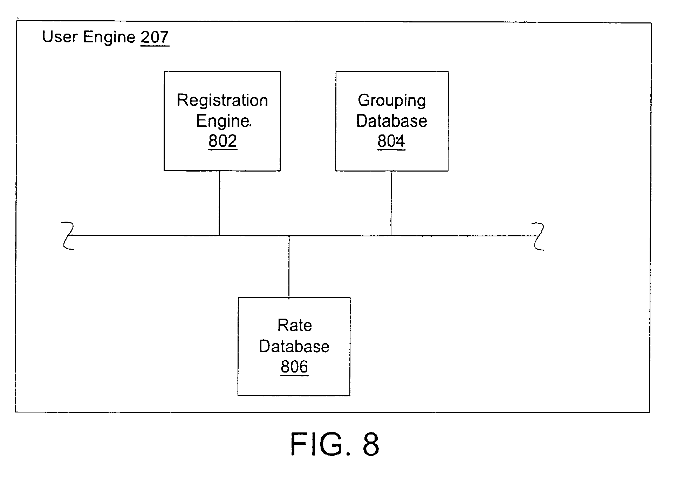

FIG. 2 illustrates one exemplary embodiment of the communication architecture. Alternative embodiments may comprise more, fewer, or no user sub-engines within the distribution system 206. For example, the present invention may be practiced utilizing the user engine 207 without any sub-engines. This single user engine 207 will then have a plurality of user tiers (as will be described in subsequent figures, covering various groupings of travel agents, corporate users, internet users, and others). The exemplary alternative user engine 207 will be discussed in more detail in connection with FIG. 8.

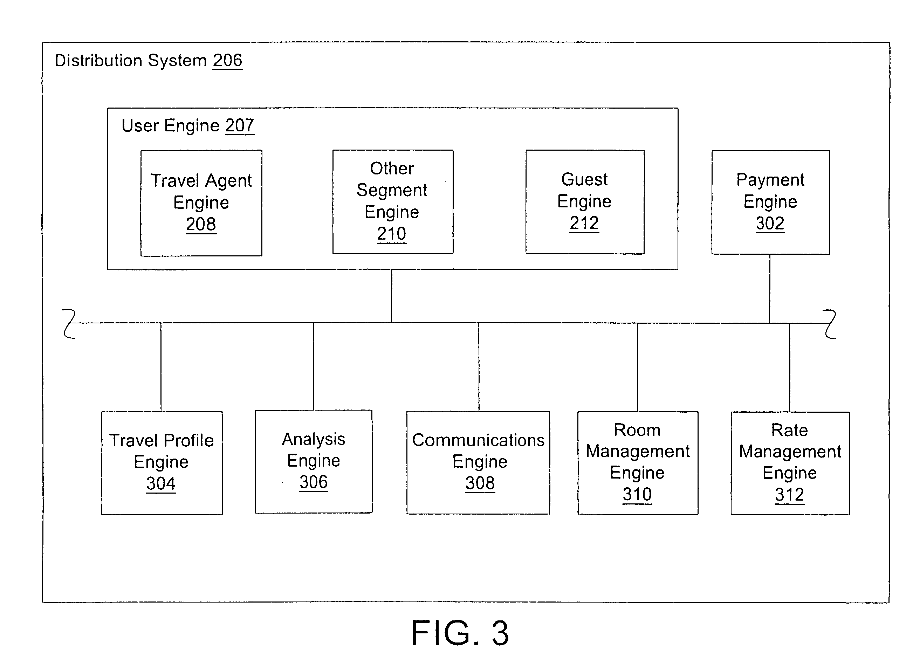

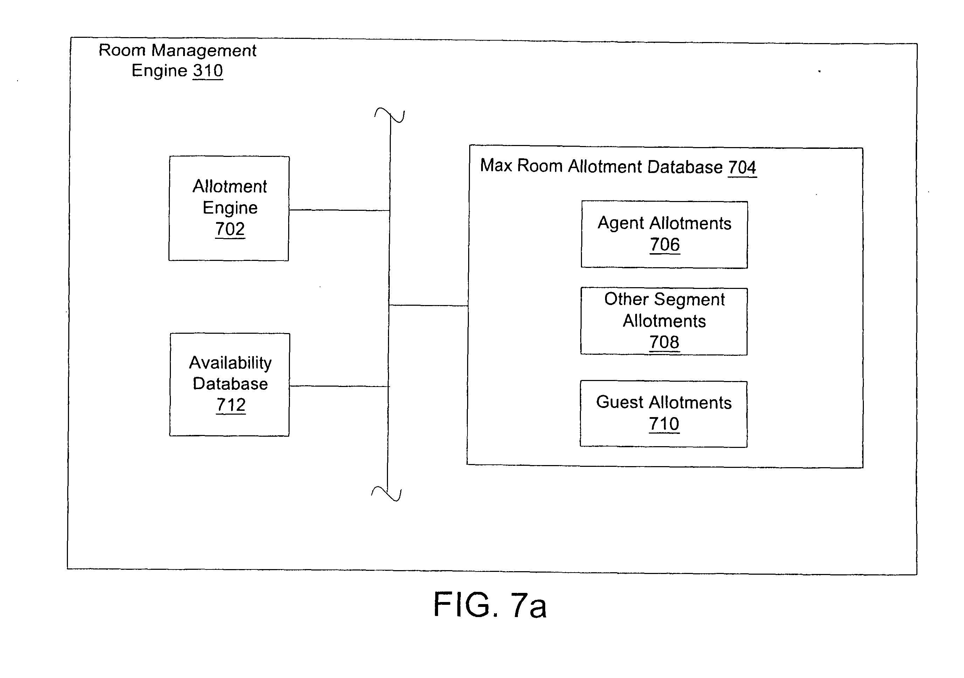

Referring now to FIG. 3, a block diagram of the exemplary distribution system 206 for a particular travel provider is shown. In addition to the user engine 207, the distribution system 206 further comprises a payment engine 302, travel profile engine 304, an analysis engine 306, a communications engine 308, a room management engine 310, and a rate management engine 312. The room management engine 310 will be discussed in more detail in connection with FIGs. 7a-7e. In alternative embodiments, not all of these engines will be present, more engines may be provided, or different engines may be utilized in the distribution system 206.

The exemplary payment engine 302 processes payment for travel services. The payment engine 302 may comprise several different payment systems: credit facilities (i.e., floating deposit), prepayment (i.e., prepaid), PAX account (i.e., guest pays directly to the travel provider and travel provider will pay agents commissions periodically), and online credit card authorization. The payment engine 302 will monitor a user's (e.g., travel agent, corporation, etc.) credit facilities for each reservation to insure that credit is not exceeded. Further, the payment engine 302 provides reports when reservations require payment in a prepayment system. Each user may have a different payment term depending on the travel provider's policies and relationship with each user. If online credit card authorization is used, the payment engine 302 will link to a third party bank system to authorize such payment before the reservation is confirmed.

The exemplary travel profile engine 304 allows the travel provider access to create and update the travel provider website 204 (FIG. 2). For example, the travel provider may specify graphics, icons, hotel information, etc. for use on the travel provider website 204. Additionally, the travel provider may update their travel provider website 204 with package deals or other promotional items.

In order to maintain records and to analyze current and future markets, the analysis engine 306 prepares reports for the travel provider. For example, a generated report may provide a list of reservations made with prepayment terms. The report will list unpaid reservations and their payment due dates. Thus, this report may be utilized by the travel provider accounting department to follow up on the payment matters. Further reports may highlight average room rates per category of travelers (e.g., reservations made via travel agent, other segment, or directly by guest), average room vacancies, average length of stay, etc.

The rate management engine 312 performs rate set up and allows changes to the rates by the travel provider. Thus, rates for each inventory category for each tier (as will be discussed infra) are entered and managed through the rate management engine 312. In one embodiment, various rate databases may also be stored within the rate management engine 312.

In one embodiment of the present invention, the communications engine 308 allows the travel provider to communicate with a particular group, such as certain tiers of travel agents. The communications may include last minute deals, future promotions, etc. The travel provider may provide the communication through e-mail, promotional mailers, faxes, etc.

FIG. 4a is an exemplary block diagram of the travel agent engine 208 of FIG. 3 shown in more detail. The travel agent engine 208 further comprises an agent registration engine 402, an agent grouping database 404, and an agent rate database 406. The exemplary agent registration engine 402 verifies travel agent login and password combinations entered via a login and password field on the travel provider website 204 (FIG. 2). Upon verification of the login and password, the registered travel agent may access hotel room allotments and rates designated for the grouping or tier the travel agent is a member of. The travel agent tier system will be discussed in more detail in connection with FIG. 4b. In an alternative embodiment, the registration engine 402 may be located outside of the travel agent engine 208 within the user engine 207 of FIG. 3, in the room management engine 310 (FIG. 3), or elsewhere in the distribution system 206.

The agent registration engine 402 also allows for the registration of new travel agents. Typically, a new travel agent desiring to register with the travel provider website 204 is asked to input registration information. The registration information may include company name, contact information, and cliental specialization. Based on this information, the travel provider may then assign the newly registered travel agent to a proper agent tier. The travel provider may also extend an invitation to a regular non-registered client to register by sending a pre-approved login and password to the client.

Referring now to FIG. 4b, an exemplary set of agent tiers 410 within the agent grouping database 404 is shown. The agent tiers 410 each represent at least one registered travel agent. These registered travel agents are assigned to their respective agent tier 410 by the travel provider upon registration. However, the travel provider may at any time change the agent tier 410 assigned to a particular travel agent. For example, a travel agent can be initially categorized in agent tier A 410a. After six months, if this particular agent is a good support agent who makes a large volume of bookings, the travel provider can then change the agent to agent tier B 410b for better rates and allotments. Further, the number of agent tiers 410 created within the agent grouping database 404 is at the discretion of the travel provider.

These agent tiers 410 may be determined based on size, location, frequency of booking, or any other criteria the travel provider chooses. For example, agent tier A 410a may represent a grouping of small European agents, agent tier B 410b may represent a grouping of medium European agents, and agent tier C 410c may represent a grouping of large Asian agents, and so on. Alternative, agent tier A 410a may represent a grouping of travel agents who booked over $20,000 in hotel rooms in the previous year while agent tier B 410b may represent a grouping of travel agents who booked between $10,000 to $20,000 in hotel rooms in the previous year, and so forth. In further embodiments, the agent tier 410 may represent a single travel agent as in the case where a room allotment contract exists between this travel agent and the travel provider. The agent tier 410 assignments are at the discretion of the travel provider and may be of any desired criteria.

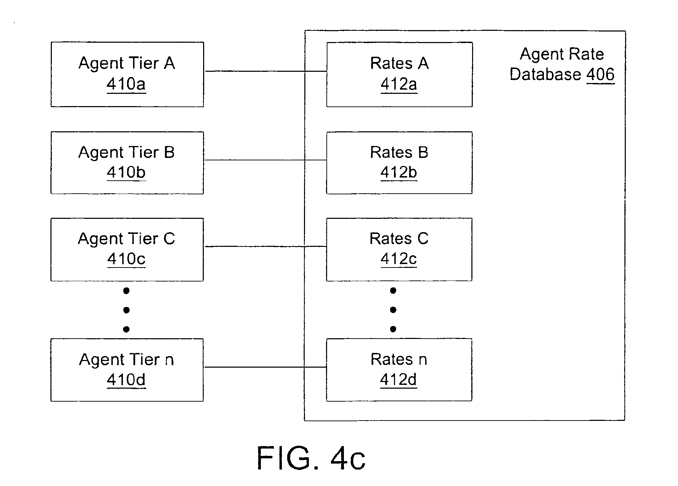

FIG. 4c is a block diagram of exemplary relationships between the agent tier 410 and the agent rate database 406, according to one embodiment of the present invention. Rates for each particular room category (i.e., inventory category) may vary based on the agent tier 410 to which the travel agent is assigned. Thus, agents in the agent tier A 410a will have rates A 412a, agents in the agent tier B 410b will have rates B 412b, agents in the agent tier C 410c will have rates C 412c, and so forth. In alternative embodiments, the rate database 406 may be located in the room management engine 310, in the rate management engine 312 (FIG. 3) or elsewhere in the distribution system 206. The various rates 412 are set by the travel provider and can be changed at any time.

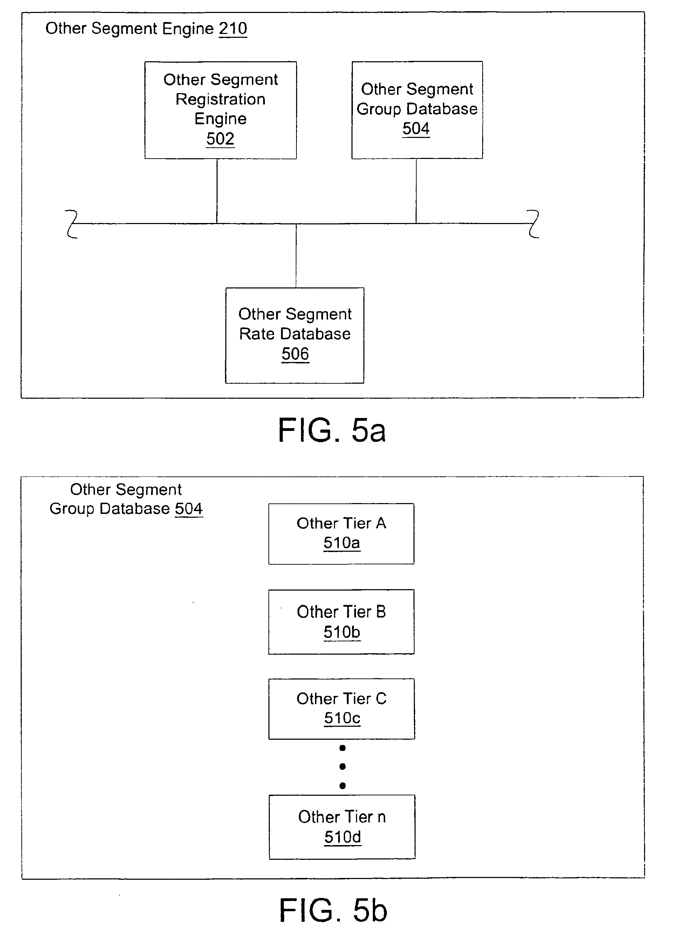

Referring now to FIG. 5a, an exemplary block diagram of the other segment engine 210 of FIG. 3 is shown in more detail. The other segment engine 210 further comprises an other segment registration engine 502, an other segment grouping database 504, and an other segment rate database 506. Similar to the agent registration engine 402 (FIG. 4a), the other segment registration engine 502 verifies other segment login and password combinations entered via a login and password field on the travel provider website 204 (FIG. 2). Upon verification of the login and password, the registered (other) segment member may access hotel rooms and rates designated for the grouping (i.e., tier) to which the segment member is assigned. In an alternative embodiment, other segment registration engine 502 and the agent registration engine 402 comprise one single registration engine located in the user engine 207 (FIG. 3).

In the present embodiment, segment members may constitute a broad range of users. One set of users are corporations. These corporations typically will have a special contract rate from the travel provider or hotel (i.e., the corporate rate). In prior art systems, the corporate rates are normally established by written contracts which determine a fixed rate and a fixed allotment. This may lead to the deficiency of blocking off too many rooms for corporate members which other guests may desire to book. The present invention's room management engine 310, as will be described in more detail in connection with FIG. 7a cures this deficiency by providing maximum room allotments based on segment member tiers.

Segment members further may comprise members of the travel provider's frequent travelers/membership program. For example, Hilton Hotels® has a membership program, Hilton Hhonors® , which provides special rates and benefits for its members. Hhonors® members will access the other segment engine for special rates and amenities by entering a registered membership number (or login) and password on the Hilton® website.

Members of special travel related websites may also access the other segment engine 210. Travel and retail agents that are members of a travel network, such as www.hotelexchange.com, will log in through their member website (e.g., travel provider website 204 of FIG. 2), and will be directed to the other segment engine 210 to access the special rates and room allotments set up for them in this engine 210. In alternative embodiments, the members of the travel network may be directed to the travel agent engine 208 (FIG. 2), which will have a special tier designated for the network members. Further embodiments may direct the travel network members to another user sub-engine designated by the travel provider.

Similarly, corporate members of a corporate network, such as www.hotelforcorporate.com, will log in through their corporate member website (e.g., travel provider website 204, FIG. 2) which will direct the corporate members to the other segment engine 210 for their special rates and room allotment. In alternative embodiments, the members of the corporate network may be directed to a corporate engine or another similar user sub-engine within the user engine 207.

The other segment engine 210 may also be accessed for special promotion rates. For example, an individual traveler may find a limited-time, special rate for a travel provider or hotel in a local newspaper ad. The ad will give a special rate code or promotion code. This rate or promotion code is entered in a specific field on the travel provider website 204 in lieu of a login and password to access the other segment engine 210. Alternatively, a separate promotions engine may be provided in the user engine 207 to handle these reservations. Further embodiments may direct promotion rate users to another user sub-engine designated by the travel provider.

In alternative embodiments of the present invention, the other segment engine 210 may be replaced by a plurality of user sub-engines. For example, instead of having the present other segment engine 210, alternative embodiments may have a separate corporate engine, a hotel members engine, corporate network engine, travel agent network engine, and a special promotions engine. Further embodiments of the present invention may have different combinations of these user sub-engines or other user sub-engines.

The other segment registration engine 502 also allows for the registration of new (other) segment members. Typically, a new segment member desiring to register with the travel provider website 204 is asked to input registration information. The registration information may include company name, contact information, and preferences. Based on this information, the travel provider may then assign the newly registered segment member to a proper other segment tier.

Referring now to FIG. 5b, an exemplary set of other segment tiers 510 within the other segment grouping database 504 is shown. The other segment tiers 510 each represent at least one registered segment member. As previously discussed, these registered segment members are assigned to their respective other segment tiers 510 by the travel provider upon registration. The travel provider may at any time change the other segment tier 510 assigned to a particular segment member. Further, the number of tiers in the other segment grouping database 504 is set at the discretion of the travel provider.

Similar to the agent tiers 410 (FIG. 4c), membership in the other segment tiers 510 may be determined based on size, location, frequency of booking, or any other criteria the travel provider chooses. For example, other segment tier A 510a may represent a grouping of large size corporations while other segment tier B 510b may represent a grouping of medium size corporations, and so forth. Alternatively, the other segment tiers 510 may organize members via business types. For example, other segment tier C 510c may represent a grouping of oil companies. As previously discussed, the other segment engine 210 may contain other members or users (e.g., hotel traveler program members, promotion rate guests, www.hotelexchange.com members, www.hotelforcorporate.com members, etc.) which are assigned to the various other segment tiers 510. Further, the other segment tiers 510 may each contain one or a plurality of members. The other segment tier 510 assignments are determined at the discretion of the travel provider.

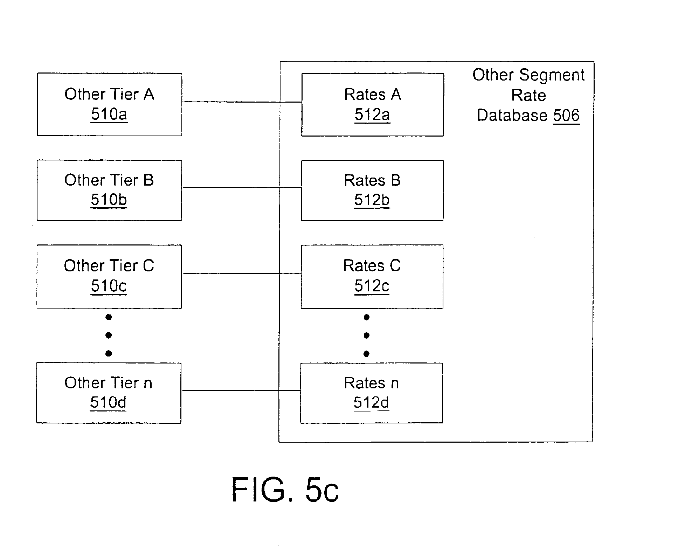

FIG. 5c is a block diagram of exemplary relationships between the other segment tiers 510 and the other segment rate database 506, according to one embodiment of the present invention. Rates for each particular room category (i.e., inventory category) vary based on the other segment tier 510 to which the segment member is assigned. Thus, segment members in the other segment tier A 510a will have rates A 512a, segment members in the other segment tier B 510b will have rates B 512b, segment members in the other segment tier C 510c will have rates C 512c, and so forth. Alternatively, the rate database 506 may be located in the room management engine 310, in the rate management engine 312 (FIG. 3), or elsewhere in the distribution system 206. The various rates are set by the travel provider, and can be changed at any time.

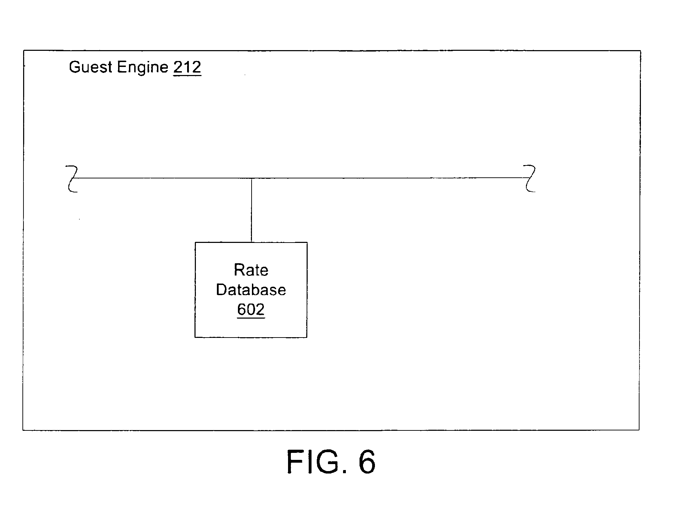

Referring now to FIG. 6, an exemplary block diagram of the guest engine 212 is shown. The guest engine 212 comprises at least a rate database 602. The rate database 602 contains the rates (for each inventory category) designated by the travel provider for any individuals making reservations directly with the travel provider (e.g., individuals not using a travel agent to make reservations, unregistered travel agents, etc.). The individual may access this engine via the Internet, or alternatively, call a travel provider and work with a reservationist accessing the guest engine 212.

Although the FIG. 6 embodiment only shows one set of rates and one tier for individual guests, further embodiments may comprise more guest tiers and corresponding rates. For example, individual guests utilizing a promotional code found in an ad may be directed to the guest engine 212. In this situation, the guest engine 212 may contain a promotional registration engine for verification of the promotional code. Additionally, a guest tier and corresponding rates are established for the promotional individual guests, while a separate guest tier and rates are established for non-promotional individual guests. Further engines and modules may be located within the guest engine 212. Alternatively, the rate database 602 may be located in the room management engine 310, in the rate management engine 312 (FIG. 3), or elsewhere in the distribution system 206.

The present invention has been discussed above utilizing various user engines for registration and categorization of users into tiers. However, as discussed in connection with FIG. 2, the present invention may be practiced utilizing only the user engine 207 (FIG. 3) without sub-engines. This alternative user engine 207, which will be described in more detail in connection with FIG. 8, will have a plurality of user tiers for the various groupings of travel agents, corporate users, internet users, and others.

FIG. 7a is a block diagram of an exemplary room management engine 310 according to one embodiment of the present invention. The room management engine 310 comprises an allotment engine 702 and a maximum room allotment database 704. The allotment engine 702 performs the set up, maintenance, and monitoring of the maximum room allotment database 704. Thus, the allotment engine 702 allows the travel provider to enter and update room allotment information at any time. Furthermore, the allotment engine 702 checks room availability when reservations are attempted to verify that rooms are available for booking. In an alternative embodiment, the various rate databases (e.g., rate databases 406, 506, and 602) may be located in the room management engine 310, and the allotment engine 702 is responsible for setting up, maintaining, and monitoring the various rates.

The maximum room allotment database 704 stores the room allotment data as established by the travel provider. In the present embodiment, the maximum room allotment database 704 further comprises agent allotments 706, other segment allotments 708, and guest allotments 710. Further allotments may be present in the maximum room allotment database 704 depending on the travel provider's categorization of their various clients (e.g., promotional allotments, special travel agent network allotments, etc. - see discussion in connection with FIG. 5a). Thus, the allotments in the maximum room allotment database 704 will correspond to the user sub-engines (e.g., travel agent engine 208, other segment engine 210, guest engine 212, etc.) and their respective tiers.

The room management engine 310 may further comprise an availability database 712. The availability database 712 stores data related to the number of rooms in each inventory category (e.g., standard, deluxe, suites, etc.) still remaining available. The data is automatically updated by the allotment engine 702 after each reservation. Alternatively, the availability data may be stored within the allotment database or elsewhere in the room management engine 310 or the distribution system 206 (FIG. 2).

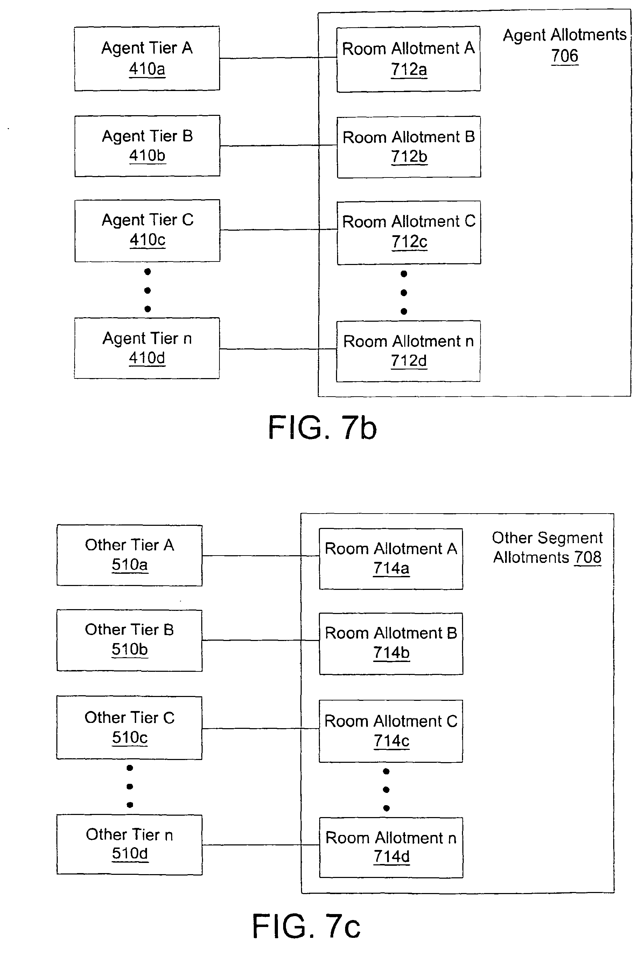

The relationship between these allotments 706, 708, and 710 and their corresponding tiers are shown and described in FIGs. 7b-7d. FIG. 7b is an exemplary diagram illustrating the relationships between the agent tiers 410 and the agent allotments 706. As shown, travel agents in agent tier A 410a have access to rooms available in room allotment A 712A, while travel agents in agent tier B have access to rooms in room allotment B 712b, and so forth. According to the present invention, travel agents in one tier 410 cannot access rooms in a room allotment 712 not corresponding to their own tier 410.

Similarly, FIG. 7c illustrates an exemplary diagram of the relationship between the various other segment tiers 510 and their corresponding room allotments 714 in the other segment allotments 708. Thus, members or users in the other segment tier A 510a have access to rooms in room allotment A 714a, members or users in the other segment tier B 510b have access to rooms in room allotment B 714b, and so on.

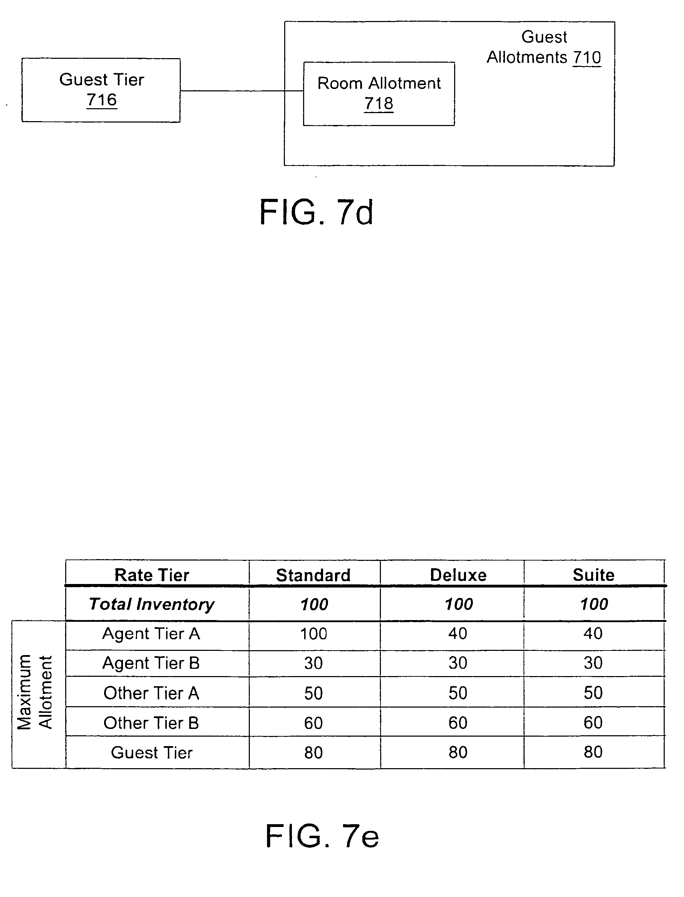

Finally, FIG. 7d illustrates an exemplary relationship between a guest tier 716 and room allotments 718 in the guest allotments 710. The guest tier 716 may represent internet guest users or other individuals who book hotel rooms directly with the hotel or travel provider. Alternative embodiments may comprise a plurality of guest tiers corresponding to a respective plurality of room allotments.

In alternative embodiments of the present invention, the various allotments may be located in their respective user sub-engines. For example, the agent allotments 706 may be located in the travel agent engine 208, the other segment allotments 708 may be located in the other segment engine 210, and the guest allotments 710 are located in the guest engine 212. In a further alternative embodiment utilizing only the user engine 207 without sub-engines, the maximum allotments may be located in the user engine 207.

Referring now to FIG. 7e, an exemplary table of hotel room allotments according to one example utilizing the present invention is shown. Because the present invention provides a centralized system for travel providers to group various users into an unlimited number of tiers based on the user's categorization, the present invention is able to utilize a maximum allotment distribution system. Based on this maximum allotment distribution system, the total number of rooms allotted between the various tiers will likely exceed the number of rooms available.

As shown in the exemplary table of FIG. 7e, for standard rooms on a particular day, the hotel only has a total of 100 standard rooms. However, a maximum of 100 standard rooms are allotted to agent tier A, a maximum of 30 standard rooms are allotted to agent tier B, a maximum of 50 standard rooms are allotted to other segment tier A, a maximum of 60 standard rooms are allotted to other segment tier B, and a maximum of 80 rooms are allotted to the guest tier. Thus, the total number of standard rooms allotted in this exemplary maximum allotment distribution example is 320 standard rooms, as opposed to the prior art straight allotment of 100 standard rooms. Other embodiments may comprise more tiers and/or different room allotments.

In the present example, agent tier A (e.g., agent tier A 410a of FIG. 7b) is allotted, and has access to, 100 standard rooms, 40 deluxe rooms, and 40 suites (i.e., the inventory categories). These allotments are stored in a corresponding room allotment (e.g., room allotment A 712a of FIG. 7b). Similarly, other tier A (e.g., other tier A 510a of FIG. 7c) is allotted, and has access to 50 standard rooms, 50 deluxe rooms, and 50 suites which are stored in a corresponding room allotment (e.g., room allotment A 714a of FIG. 7c). The other tiers in the example are allotted rooms in a similar fashion.

In comparison between the prior art straight allotment system of FIG. 1 and the exemplary maximum distribution system of FIG. 7e, if a user in rate tier D reserves 10 standard rooms in the straight allotment prior art system of FIG. 1, no more standard rooms are available for rate tier D. However, if the same user is a member of the other segment tier B in the present invention, 50 standard rooms will still be available to the other segment tier B members. Thus, the present invention minimizes loss of opportunity of sale since more rooms can be allotted to each tier, consequently creating more availability for each user.

Overbooking will be prevented in the present invention by the allotment engine 702 (FIG. 7a) monitoring the room availability. For example, if a user in the other tier B reserves 10 standard rooms, the allotment engine 702 will reduce the total number of standard rooms available to 90 standard rooms. Subsequently, if a travel agent in agent tier A attempts to reserve 100 standard rooms, the allotment engine 702 will not allow reservations of more than 90 standard rooms even though the maximum allotment is 100 standard rooms for agent tier A.

In addition to monitoring the total rooms available, the allotment engine 702 also monitors for the maximum rooms allowed. Thus, if a travel agent in agent tier B wants to reserve 40 standard rooms even though 90 total standard rooms are still available, the allotment engine 702 will reject the reservation because agent tier B is only allowed a maximum of 30 standard rooms.

Referring now to FIG. 8, an alternative embodiment of the user engine 207 is shown. This alternative embodiment does not utilize user sub-engines, such as the travel agent engine 208 and other segment engine 210 of FIG. 3. Instead, the alternative embodiment comprises a single registration engine 802, a single grouping database 804, and a single rate database 806 for all users. Thus, a registered travel agent or other segment member will provide a login and password which is subsequently verified by the registration engine 802. Once verified, the registered member is directed to their appropriate tier in the grouping database 804. All users are assigned to a tier in the grouping database regardless of their market segment.

Information regarding these tiers are stored in the grouping database 804. Similar to the agent and other segment grouping databases, the grouping database 804 comprises a plurality of tier categories. Further, each tier comprises at least one user (e.g., travel agents, corporations, internet guest, etc.), and the tier assignments for a user may be changed at any time by the travel provider. Thus, the grouping database 804 will include travel agent tiers, other segment tiers, guest tiers, and any other tiers the travel provider desires to use.

This embodiment will also allow cross-grouping of market segments. For example, certain corporate members can be grouped with certain travel agent members in one tier. Subsequently, this tier may be offered special rates and room allotments. Any grouping of market segments is possible with the present invention, and is at the discretion of the travel provider.

Similar to the agent, other segment and guest rate databases of the previous embodiment, the rate database 806 contains the corresponding rate for each inventory category for each tier of the grouping database 804. Alternatively, the rate database 806 may be located in the room management engine 310 (FIG. 3) or elsewhere in the distribution system 206 (FIG. 2).

The assignment of room allotments in the present invention is at the discretion of the travel provider, and the total number of rooms allotted in the maximum allotment distribution system may be any number of rooms. The travel provider also has the ability to change allotments at any time. However, since the present distribution system is based on maximum rooms assignments (in contrast to straight allotment systems), there is little need for adjustment or change to the allotments once set.

Flexibility and minimal user maintenance allows small travel providers and independent travel providers the ability to utilize the present invention. For example, independent travel providers can work with special travel websites such as www.hotelexchange.com. Additionally, small travel providers can advertise to specific markets (though newspapers or magazines) and be able to maintain their own reservations system.

The present invention has been described above as operating independently of any other systems (i.e., the present invention is the only reservations system used by a travel provider). However, the present invention may also operate along with existing reservation systems. Because many contracts between travel agents and travel providers are long term, the need may exist to integrate other distribution systems with the present maximum allotment distribution system. For example, a travel provider may utilize the present invention for distribution of two-thirds of their rooms and still use a GDS or other prior art system for the remainder of their rooms. In this case, the rooms allotted to the prior art systems would be subtracted from the number available, and the remaining number of rooms will be the number of rooms available in the room management engine 310. Alternatively, the existing GDS or similar prior art system may be one tier of the present invention. For example, the GDS may be the other tier A 510A (FIG. 5b) having a maximum room allotment equal to the contracted room allotment amount.

The present invention also allows the travel provider to arrange room allotments based on groupings of clients and users. Whereas many prior art systems are based on written contracts granting individual agents or corporations specific room allotments and GDS or similar systems only allow for one room allotment and rate to be shared by all users for each category inventory, the present invention allows room allotments and rates to be group based (i.e., based on the tiers). The tiers may comprise one member or a plurality of members. The flexibility provided by this arrangement allows a travel provider to allotment rooms efficiently. For example, more rooms may be allotted to tiers that pay higher rates, and less rooms allotted to tiers paying lower rates. Consequently, revenue will likely increase for the travel provider.

The present invention has been described above with reference to exemplary embodiments. It will be apparent to those skilled in the art that various modifications may be made and other embodiments can be used without departing from the broader scope of the invention. For example, the present invention may be utilized for the distribution of other inventories such as airline or train tickets. Therefore, these and other variations upon the exemplary embodiments are intended to be covered by the present invention.

## Claims

1. A system for efficient distribution of inventory allotments among a plurality of tiers, comprising:
an allotment database for storing maximum inventory allotments corresponding to inventory categories for each tier; and
an allotment engine configured for monitoring the maximum inventory allotments for each tier and a total inventory available for each inventory category.

2. The system of claim 1 wherein the inventory is hotel rooms and the inventory categories are hotel room categories.

3. The system of claim 1 further comprising an availability database for storing the total inventory available.

4. The system of claim 1 further comprising a registration engine for verifying registered users and directing the registered user to their assigned tier.

5. The system of claim 1 wherein a total of the maximum inventory allotment for all tiers in a single inventory category is greater than the total inventory available for the single inventory category.

6. The system of claim 1 further comprising a plurality of rates wherein each of the plurality of rates corresponds to a different inventory category and tier.

7. The system of claim 1 wherein the allotment engine is further configured for allowing a reservation for a particular inventory category if a reservation request is less than or equal to the maximum inventory allotment for the tier and the reservation request is less than or equal to the total inventory available.

8. A method for fulfilling a reservation request based on maximum inventory allotments among a plurality of tiers, comprising:
assigning a maximum inventory allotment for each inventory category to each tier;
comparing the reservation request for a particular inventory category from a member of a tier with the maximum inventory allotment corresponding to the particular inventory category for the tier;
comparing the reservation request with a total inventory available for the particular inventory category; and
allowing a reservation for the particular inventory category if the reservation request is less than or equal to the maximum inventory allotment for the tier and the reservation request is less than or equal to the total inventory available.

9. The method of claim 8 wherein the inventory is hotel rooms and the inventory categories are hotel room categories.

10. The method of claim 8 further comprising updating the total inventory available after allowing the reservation.

11. The method of claim 8 further comprising requiring the member to provide a member login and password in order to access the tier.

12. The method of claim 8 further comprising requiring the member to provide a promotion code in order to assess the tier.

13. The method of claim 8 wherein a total of the maximum inventory allotment for all tiers in a single inventory category is greater than the total inventory available for the single inventory category.

14. The method of claim 8 further comprising charging the member a rate corresponding to the member's tier for the particular inventory category.

15. A computer readable medium having embodied thereon a program, the program being executable by a machine to perform a method for fulfilling a reservation request based on maximum inventory allotments among a plurality of tiers, comprising:
assigning a maximum inventory allotment for each inventory category to each tier;
comparing the reservation request for a particular inventory category from a member of a tier with the maximum inventory allotment corresponding to the particular inventory category for the tier;
comparing the reservation request with a total inventory available for the particular inventory category; and
allowing a reservation for the particular inventory category if the reservation request is less than or equal to the maximum inventory allotment for the tier and the reservation request is less than or equal to the total inventory available.

16. A method for establishing a maximum allotment distribution system, comprising:
establishing a plurality of tiers;
assigning each user to one of the plurality of tiers; and
assigning a maximum inventory allotment for each inventory category to each of the plurality of tiers.

17. The method of claim 16 wherein a total of the maximum inventory allotment for a particular inventory category is greater than a total inventory available for the particular inventory category.

18. The method of claim 16 wherein the inventory is hotel rooms and the inventory categories are hotel room categories.

19. The method of claim 16 further comprising establishing a plurality of rates wherein each of the plurality of rates corresponds to a different inventory category and tier.

20. A computer readable medium having embodied thereon a program, the program being executable by a machine to perform a method for establishing a maximum inventory distribution system, comprising:
establishing a plurality of tiers;
assigning each user to one of the plurality of tiers; and
assigning a maximum inventory allotment for each inventory category to each of the plurality of tiers.

21. A centralized system for distribution of maximum allotments to users, comprising:
a user engine configured for organizing the users into a plurality of tiers; and
a management engine for maintaining a maximum inventory allotment for each inventory category for each of the plurality of tiers.

22. The system of claim 21 wherein the inventory is hotel rooms and the inventory category is a hotel room category.

23. The system of claim 21 wherein the management engine further comprises an allotment engine configured for determining if a request for inventory may be fulfilled.

24. The system of claim 21 wherein a tier of the plurality of tiers comprises at least one user.

25. The system of claim 21 wherein a tier of the plurality of tiers comprises a grouping of users having similar characteristics.

26. The system of claim 21 wherein the user engine further comprises a travel agent engine and the plurality of tiers are travel agent tiers.

27. The system of claim 21 wherein the user engine further comprises a corporate engine and the plurality of tiers are corporate tiers.

28. The system of claim 21 wherein the user engine further comprises an other segment engine and the plurality of tiers are other segment tiers.

29. The system of claim 21 wherein the user engine further comprises a guest engine.
